# DEMANDE DE BREVET EUROPEEN

(11) **EP 1 535 557 A1**
(43) Date de publication de la demande: **01.06.2005**
(21) Numéro de dépôt: 03292953.1
(22) Date de dépôt: 27.11.2003
(51) Int. Cl.: A47J 37/10, A46B 11/00

(54) **Pinceau culinaire**

(71) Demandeur: Mastrad, 75002 Paris (FR)
(72) Inventeur: Lion, Mathieu, 75002 Paris (FR); Bignon, Lucas, 94230 Cachan (FR)
(74) Mandataire: Texier, Christian

(57) **Abrégé**

La présente invention concerne un pinceau culinaire caractérisé par le fait que le manche (100) comporte un réservoir souple (120) qui communique avec le pinceau (200).

## Description

La présente invention concerne le domaine des pinceaux à application culinaire.

Les pinceaux à application culinaire sont utilisés par exemple pour étaler sur un aliment, ou un plat, une sauce, une matière grasse, un jaune d'oeuf, etc... ou équivalent, afin d'en améliorer la gustativité.

Diverses variantes de pinceaux culinaires ont déjà été proposées.

On trouvera des exemples de pinceaux connus dans les documents US D455559, US D456615, US D458760 et US D465336.

Ces pinceaux connus ont déjà rendu de grands services. Cependant ils ne donnent pas toujours pleinement satisfaction. En particulier ils ne permettent pas toujours une application homogène sur l'aliment.

On a également proposé de nombreuses poires à sauces pour application culinaire.

On trouvera des exemples de poires connues dans les documents DE-G-94 00 551, US 3 029 464, US 5 787 799, US 5 934 187, US 6 575 651.

La demanderesse a en particulier proposé dans le document US 6 244 308 un dispositif comprenant une poire équipée d'un embout susceptible d'être pourvu d'un pinceau.

Cependant les poires à sauces n'ont pas connu le succès escompté. Cela semble du en particulier au fait que leur manipulation n'est pas aisée.

La présente invention a pour but de perfectionner l'état de la technique.

Ce but est atteint dans le cadre de la présente invention grâce à un pinceau culinaire caractérisé par le fait que le manche comporte un réservoir souple qui communique avec le pinceau.

Par rapport aux pinceaux culinaires antérieurs connus, la présente invention offre l'avantage de permettre une diffusion contrôlée de sauce ou équivalent, à partir du réservoir, et ainsi permet d'améliorer l'homogénéité de l'application.

Par rapport aux poires culinaires antérieures connues, la présente invention offre l'avantage d'une manipulation aisée, le manche du pinceau pouvant être tenu et sollicité d'une main pour contrôler le volume apporté sur l'aliment ou le plat.

D'autres caractéristiques, buts et avantages de la présente invention apparaîtront à la lecture de la description détaillée qui va suivre, et en regard des dessins annexés, donnés à titre d'exemples non limitatifs et sur lesquels :
- la figure 1 représente une vue schématique en perspective d'un pinceau conforme à la présente invention,
- la figure 2 représente une vue latérale extérieure de l'élément formant manche réservoir conforme à la présente invention,
- la figure 3 représente une vue en coupe longitudinale du même élément formant manche réservoir,
- la figure 4 représente une vue latérale extérieure de l'élément formant embout pinceau conforme à la présente invention,
- la figure 5 représente une vue en coupe longitudinale de cet élément formant embout, et
- la figure 6 représente une vue d'extrémité axiale dudit élément formant embout conforme à la présente invention.

Le pinceau représenté sur les figures annexées est formé par la combinaison de deux éléments: un élément formant manche réservoir référencé 100 et un élément formant embout pinceau 200. L'embout pinceau 200 est monté de manière amovible sur le manche réservoir 100 et sert ainsi de "bouchon" à celui-ci.

Dans le cadre de la présente invention, ces deux éléments 100 et 200 sont réalisés avantageusement dans un même matériau compatible alimentaire, à savoir de préférence un matériau silicone ou un caoutchouc ou élastomère naturel ou synthétique.

La réalisation de l'ensemble du pinceau, c'est-à-dire manche réservoir et embout de distribution comportant le pinceau, dans un même matériau, permet d'éviter tout risque de dilatation thermique différentielle et donc tout risque de fuite au niveau de l'interface entre ces différents éléments.

Le manche réservoir 100 a une forme allongée. Il possède typiquement une longueur comprise entre 5 et 20 cm, avantageusement entre 9 et 16 cm, très préférentiellement de l'ordre de 12 à 15 cm, une plus grande dimension transversale comprise entre 3 et 6 cm, avantageusement entre 4 et 5 cm et un volume interne compris entre 10 et 80 cm³, avantageusement entre 20 et 50 cm³. Un manche réservoir 100 répondant aux dimensions précitées peut être tenu dans une seule main, entre le pouce et les autres doigts. Sa manipulation s'avère incomparablement plus facile que celle des réservoirs des poires à sauce connues.

Le manche réservoir 100 possède une embouchure 110. Il est conformé de manière à autoriser une déformation élastique lorsqu'il est soumis à un effort de compression, en retournant spontanément à sa configuration en expansion après l'application de cet effort.

Le volume interne 120 du réservoir présente une surface à courbure continue. Ainsi, l'ensemble de ce volume est directement accessible à partir de l'embouchure 110.

L'utilisation d'un manche pinceau 100 dont le volume interne 120 est intégralement accessible à partir de l'embouchure 110, c'est-à-dire ne présente pas de poche en contre dépouille, permet de garantir un lavage complet et donc une bonne hygiène.

Le manche réservoir 100 a la forme générale d'un fuseau allongé tronqué par un plan 102, transversal à son axe, au niveau de l'embouchure 110.

Le volume interne 120 du manche réservoir 100 est défini globalement par une génératrice à légère concavité dirigée vers l'intérieur de la chambre 120. Sur le côté opposé à l'embouchure 110, la génératrice précitée délimitant le volume interne 120 s'appuie sensiblement sur un point commun référencé 122. Par contre, côté embouchure 110, la génératrice précitée délimitant la chambre 120 s'appuie sur une couronne.

Ainsi, le volume interne 120 s'expanse progressivement en direction de l'embouchure 110.

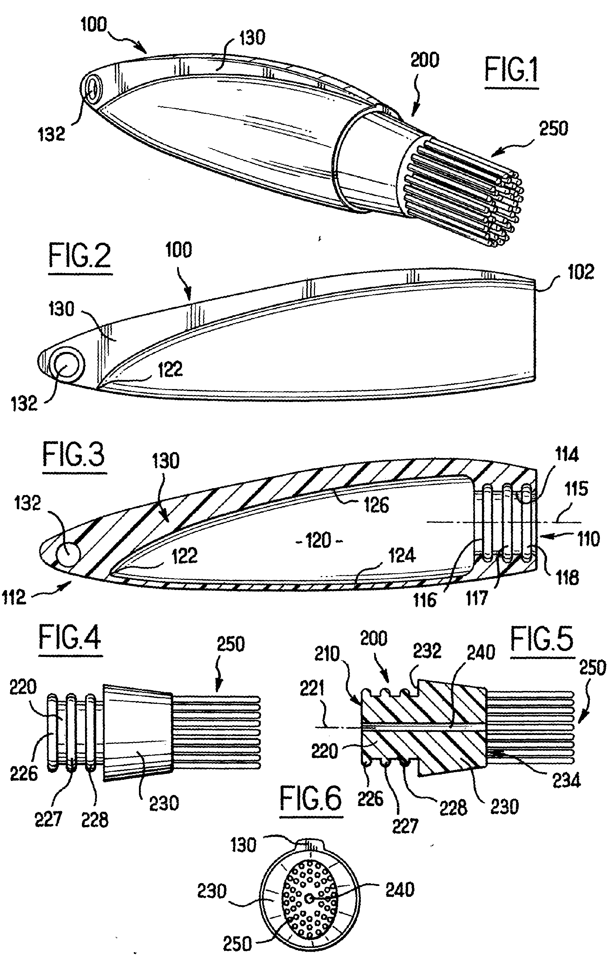

De préférence, le manche réservoir et sa chambre interne 120 présentent une symétrie par rapport à un plan longitudinal qui coïncide avec le plan de coupe de la figure 3.

On notera en revanche, que de préférence, le manche réservoir ne présente pas une symétrie par rapport à un plan orthogonal au plan de coupe précité. En d'autres termes, le manche réservoir 100 ne présente pas une symétrie de révolution par rapport à son axe longitudinal.

Dans le plan de coupe de la figure 3, la génératrice 124 délimitant la partie inférieure de la chambre 120 présente une flèche de l'ordre de 2 à 4mm, de préférence de l'ordre de 3mm pour une longueur de l'ordre de 95mm, tandis que la génératrice 126 qui délimite la partie supérieure de la chambre 120, sur la figure 3, présente une flèche comprise entre 8 et 12mm, de préférence de l'ordre de 10mm pour une longueur de l'ordre de 95mm.

Comme on le voit sur les figures annexées, de préférence, le manche réservoir 100 est muni d'une nervure externe 130 située dans le plan de symétrie précitée. La nervure 130 s'étend sur un côté du manche, dans le plan de symétrie, à partir de l'embouchure 110 jusque sur l'extrémité arrière 112 opposée.

Au niveau de cette extrémité arrière 112, la nervure 130 possède de préférence un orifice traversant 132 formant oeillet d'accrochage.

On notera que la génératrice délimitant la chambre interne 120 présente une concavité supérieure dans le plan de symétrie coïncidant avec la nervure 130 précitée.

L'embouchure 110 du manche pinceau 100 s'appuie sur un canal 114 délimité par une surface cylindrique de révolution autour d'un axe 115 qui coïncide sensiblement avec l'axe longitudinal du manche pinceau 100. L'embouchure 100 possède par ailleurs trois gorges 116, 117, 118, au niveau du canal 114, centrées sur l'axe 115, équi-réparties le long de celui-ci et de préférence en forme de demi tore. De préférence la section des gorges 116, 117, 118 est hémi-circulaire.

Ces gorges 116, 117, 118 constituent des moyens d'étanchéité en coopération avec des bourrelets complémentaire prévus sur l'embout 200.

L'embout 200 représenté sur les figures 4, 5 et 6 annexées est destiné à être engagé de manière amovible sur l'embouchure du manche réservoir 100. Il comprend une masse 210 délimitant un fût cylindrique 220 centré sur un axe 221 et comportant sur sa surface extérieure trois bourrelets 226, 227, 228 annulaires complémentaires de la géométrie des gorges 227, 228 de sorte que lors de l'assemblage de l'embout 200 sur l'embouchure 110, chaque bourrelet 226, 227, 228 prenne position dans l'une des gorges 116, 117, 118 pour assurer l'étanchéité entre le manche pinceau 100 et l'embout 200.

Bien entendu, le nombre de gorges 116, 117, 118 doit être égal au nombre de bourrelets 226, 227, 228, mais ce nombre n'est pas nécessairement égal à trois.

Par ailleurs, les bourrelets 226, 227, 228 en saillie sur le fût cylindrique 220 et de contour en section hémicylindrique selon les figures 4 et 5 peuvent être remplacés par des bourrelets de toute autre section équivalente sous réserve d'adapter en conséquence la section des gorges 116, 117 et 118 afin de constituer des moyens d'étanchéité à complément de forme.

A titre d'exemple non limitatif, le diamètre du fût 220 peut être de l'ordre de 17mm (complémentaire de la section du canal 114) tandis que les bourrelets 226, 227, 228 ont un rayon de courbure de l'ordre de 2,5mm (complémentaire du rayon de courbure des gorges 116, 117 et 118).

La longueur du fût cylindrique 220 est typiquement de l'ordre de 15mm, les trois bourrelets 226, 227 et 228 étant équi-répartis sur la surface externe du fût 220. L'espace délimité ainsi entre deux bourrelets 226, 227, 228 correspond à une surface cylindrique de l'ordre de 2,5mm de large.

Le fût cylindrique 220 est prolongé sur une extrémité par un élément de type tronconique 230. L'élément 230 est effilé en éloignement du fût cylindrique 220. Il est défini un décrochement 232 entre le fût cylindrique 220 et l'élément tronconique 230 sous forme d'une surface en couronne transversale à l'axe 221.

Le décrochement 232 est destiné à venir reposer contre la surface d'extrémité du manche 100 lors de l'assemblage.

Son diamètre extérieur moyen est typiquement de l'ordre de 20mm.

La masse 210 définie par le fût cylindrique 220 et l'élément tronconique 230 est traversée par un canal central rectiligne 240 centré sur l'axe 221. De préférence, le canal 240 a une section constante et un diamètre de l'ordre de 2mm.

Sur sa surface d'extrémité 234 opposée au décrochement 232, l'élément tronconique 230 est muni d'une pluralité de cils 250 qui entourent l'orifice de sortie du canal traversant 240.

Il est ainsi prévu de préférence, trois séries concentriques de cils 250 entourant l'orifice de sortie du canal 240.

A titre d'exemple non limitatif, la première couronne centrale de cils 250 comprend 8 cils, la couronne intermédiaire en comprend 14 et la couronne radialement externe de cils 250 en comprend 20.

A titre d'exemple non limitatif, les cils 250 ont une longueur comprise entre 15 et 40mm, de préférence de l'ordre de 25mm et un diamètre moyen de l'ordre de 1,5mm.

Par ailleurs, la longueur de l'élément tronconique 230 est typiquement de l'ordre de 15mm.

Comme on le voit sur la figure 6, la répartition des cils 250, de préférence, n'est pas rigoureusement concentrique autour de l'axe 221, la répartition des cils est de préférence généralement en ovale, le grand axe de la disposition coïncidant avec le plan de symétrie de la figure 3.

Bien entendu la présente invention n'est pas limitée aux modes de réalisation particuliers qui viennent d'être décrits mais s'étend à toute variante conforme à son esprit.

A titre d'exemple non limitatif, on peut ainsi prévoir des bourrelets sur l'embouchure 110 du manche réservoir 100 et au contraire des gorges en creux sur le fût 220 de l'embout 200.

La réalisation du pinceau, y compris des cils 250 venus de matière sur l'embout 200, intégralement en silicone ou élastomère alimentaire, s'avère particulièrement avantageuse pour des questions d'hygiène. Grâce à cette disposition,, l'ensemble du pinceau, y compris l'embout et les cils 250 peuvent être aisément nettoyés par tout moyen approprié, y compris dans une machine à laver la vaisselle.

Enfin, la réalisation des moyens d'étanchéité venus de matière en silicone ou élastomère sur les deux éléments complémentaires permet de garantir une étanchéité parfaite au pinceau sans exiger d'élément d'étanchéité additionnel.

Le manche réservoir 100 peut être rempli de sauce par tous moyens appropriés après avoir retiré l'embout pinceau 200. En variante le manche réservoir 100 peut être rempli, embout pinceau 200 en place, par aspiration, c'est à dire en comprimant le manche, en positionnant le pinceau et l'ouverture du canal 240 dans une réserve, par exemple dans le fond d'un plat contenant de la sauce, puis en relâchant le manche de sorte que celui-ci reprenne sa géométrie d'origine grâce à son élasticité intrinsèque et ce faisant aspire un volume de sauce à l'intérieur de la chambre 120.

En variante les cils 250 peuvent être réalisés en un matériau différent de l'embout 200, par exemple en matériau thermoplastique tel que par exemple celui commercialisé sous la dénomination commercial « nylon », et rapportés sur ledit embout 200.

De même l'on peut envisager de réaliser l'intégralité de l'embout 200 en un matériau autre que le silicone et les élastomères, par exemple en un matériau thermoplastique, voir en métal. Le cas échéant, dans ce contexte, les cils 250 peuvent également être réalisés en un matériau différent de l'embout 200. A titre d'exemple non limitatif, on peut par exemple réaliser le manche réservoir 100 en silicone ou élastomère, l'embout 200 en élastomère, silicone, matériau thermoplastique ou métal et les cils 250 en silicone, élastomère ou matériau thermoplastique.

Par ailleurs, une partie du manche réservoir 100 peut, le cas échéant, être réalisé en un matériau différent du silicone et de l'élastomère, par exemple en matériau thermoplastique ou métal.

On a décrit précédemment, un embout comprenant un canal traversant 240. En variante, l'embout peut comporter plusieurs canaux traversant.

Selon une autre variante, l'embout 200 peut être équipé d'un ou plusieurs cils 250 creux dont le canal est aligné sur un ou plusieurs canal(ux) traversant l'embout 200.

De plus, les cils 250 peuvent être disposés selon une géométrie différente de celle précédemment décrite, par exemple en rangée(s).

Selon une autre variante de réalisation l'embout 200 traversé par le canal 240 et portant les cils 250 peut être venu de matière sur le manche réservoir 100 (et donc non amovible). Le manche réservoir 100 possédant une embouchure en un autre lieu, par exemple sur son extrémité adjacente à l'oeillet d'accrochage 132 opposée au pinceau 200, laquelle embouchure est obturée lors de l'utilisation par un bouchon amovible.

## Revendications

1. Pinceau culinaire **caractérisé par le fait que** le manche (100) comporte un réservoir souple (120) qui communique avec le pinceau (200).

2. Pinceau selon la revendication 1, **caractérisé par le fait qu'**il est réalisé intégralement en silicone ou élastomère alimentaire.

3. Pinceau selon l'une des revendications 1 ou 2, **caractérisé par le fait qu'**il est réalisé intégralement dans le même matériau.

4. Pinceau selon l'une des revendications 1 à 3, **caractérisé par le fait que** le manche réservoir (100) est adapté pour être tenu et sollicité d'une main.

5. Pinceau selon l'une des revendications 1 à 4, **caractérisé par le fait que** le manche réservoir (100) possède une longueur comprise entre 5 et 20 cm, avantageusement entre 9 et 16 cm, très préférentiellement de l'ordre de 12 à 15 cm.

6. Pinceau selon l'une des revendications 1 à 5, **caractérisé par le fait que** le manche réservoir (100) possède une plus grande dimension transversale comprise entre 3 et 6 cm, avantageusement entre 4 et 5 cm.

7. Pinceau selon l'une des revendications 1 à 6, **caractérisé par le fait que** le manche réservoir (100) possède un volume interne compris entre 10 et 80 cm³, avantageusement entre 20 et 50 cm³.

8. Pinceau selon l'une des revendications 1 à 7, **caractérisé par le fait qu'**il comprend un embout formant pinceau (200) monté de manière amovible sur le manche réservoir (100).

9. Pinceau selon la revendication 8, **caractérisé par le fait que** l'embout est adapté pour être engagé de manière amovible sur i'embouchure (110) du manche avec étanchéité par compléments de forme (116, 117, 118 ; 226, 227, 228).

10. Pinceau selon l'une des revendications 1 à 9, **caractérisé par le fait qu'**il comprend un embout (200) possèdant au moins un canal traversant (240) et un ensemble de cils (250) répartis autour de la sortie dudit canal (240).

11. Pinceau selon l'une des revendications 1 à 10, **caractérisé par le fait que** le manche réservoir (100) est susceptible de déformation élastique de sorte qu'il retourne spontanément à sa configuration en expansion après l'application d'un effort de compression.

12. Pinceau selon l'une des çevendications 1 à 11, **caractérisé par le fait que** le volume interne (120) du manche (100) présente une surface à courbure continue de sorte que l'ensemble de ce volume soit directement accessible à partir de son embouchure (110).

13. Pinceau selon l'une des revendications 1 à 12, **caractérisé en ce qu'**il comprend un moyen d'étanchéité comprenant au moins une gorge annulaire (116, 117, 118) dans l'un des éléments (100) formés d'une part par le manche réservoir (100) et d'autre part par un embout (200) placé de manière amovible sur une embouchure de celui-ci, et un bourrelet (226, 227, 228) de section complémentaire sur l'autre élément (200).

14. Pinceau selon l'une des revendications 1 à 13, **caractérisé en ce que** la flèche de la génératrice délimitant la surface interne de la chambre du manche (100) est comprise entre 2 et 12mm, avantageusement entre 3 et 10mm pour une longueur de l'ordre de 95mm.

15. Pinceau selon l'une des revendications 1 à 14, **caractérisé en ce que** le volume interne (120) du manche (100) est défini globalement par une génératrice à légère concavité qui s'appuie d'un côté sensiblement sur un point commun (122) à l'opposé de l'embouchure (110) et s'appuie, côté embouchure (110), sur une couronne.

16. Pinceau selon la revendication 15, **caractérisé en ce que** ladite couronne est prolongée par un tronçon tubulaire (114) comprenant des moyens d'étanchéité (116, 117, 118).

17. Pinceau selon l'une des revendications 1 à 16, **caractérisé en ce que** l'embout (200) formant pinceau comprend au moins un canal (240) qui débouche dans le manche (100) et plusieurs couronnes de cils (250) au moins sensiblement parallèles entre eux qui entourent le canal (240).

18. Pinceau selon l'une des revendications 1 à 17, **caractérisé en ce que** l'embout (200) formant pinceau comprend un canal unique (240) qui débouche dans le manche (100) et plusieurs couronnes de cils (250) au moins sensiblement parallèles entre eux qui entourent le canal (240).

19. Pinceau selon l'une des revendications 17 ou 18, **caractérisé par le fait que** l'embout comprend trois séries de cils concentriques (250).

20. Pinceau selon l'une des revendications 1 à 19, **caractérisé par le fait que** les cils (250) formant pinceau ont une longueur comprise entre 15 et 40mm, de préférence de l'ordre de 25mm.

21. Pinceau selon l'une des revendications 1 à 20, **caractérisé par le fait qu'**il a la forme générale d'un fuseau allongé.

22. Pinceau selon l'une des revendications 1 à 21, **caractérisé par le fait qu'**il comprend une nervure externe (130) munie d'un orifice (132) traversant.

23. Pinceau selon l'une des revendications 1 à 22, **caractérisé par le fait que** les moyens d'étanchéité prévus entre le manche (100) et l'embout amovible (200) comprennent trois gorges (116, 117, 118) et trois bourrelets complémentaires (226, 227, 228).

24. Pinceau selon la revendication 1, **caractérisé par le fait que** les cils (250) composant le pinceau sont réalisés en un matériau thermoplastique et rapportés sur un embout (200).

25. Pinceau selon la revendication 1, **caractérisé par le fait que** l'intégralité d'un embout (200) formant pinceau est réalisé en un matériau thermoplastique ou métal.

26. Pinceau selon la revendication 1, **caractérisé par le fait qu'**un embout (200) formant pinceau est venu de matière sur le manche réservoir (100), ce dernier possédant une embouchure obturée lors de l'utilisation par un bouchon amovible.

27. Pinceau selon la revendication 1, **caractérisé par le fait qu'**il comprend au moins un cil creux.

28. Pinceau selon la revendication 1, **caractérisé par le fait qu'**il comprend des cils (250) disposés en rangée(s).

29. Pinceau selon la revendication 1, **caractérisé par le fait que** le manche réservoir est réalisé partiellement en silicone ou élastomère.

30. Pinceau selon la revendication 1, **caractérisé par le fait que** le manche réservoir (100), un embout amovible (200) et des cils (250) sont réalisés dans trois matériaux différents.
